# EUROPÄISCHE PATENTANMELDUNG

(11) **EP 1 717 087 A1**
(43) Veröffentlichungstag der Anmeldung: **02.11.2006**
(21) Anmeldenummer: 06007656.9
(22) Anmeldetag: 12.04.2006
(51) Int. Cl.: B60K 17/02, F02N 11/00

(54) **Vorrichtung zur kuppelbaren Verbindung der Schwungscheibe eines Antriebsmotors mit einer Abtriebswelle**

(30) Priorität: 27.04.2005 DE 102005019507
(71) Anmelder: ZF FRIEDRICHSHAFEN AG, 88046 Friedrichshafen (DE)
(72) Erfinder: Osterroth, Sven-Martin, 97337 Dettelbach (DE)

(57) **Zusammenfassung**

Die Erfindung betrifft eine Vorrichtung zur kuppelbaren Verbindung der Schwungscheibe (1) eines Antriebsmotors, insbesondere eines Verbrennungsmotors, mit einer Abtriebswelle, insbesondere einer Getriebewelle, mittels einer Kupplungseinrichtung (2), insbesondere einer Kraftfahrzeugkupplungseinrichtung, wobei die Schwungscheibe (1) zumindest zeitweise mit einem Zahnkranz (3) in Drehverbindung steht und wobei der Zahnkranz (3) mit einem Startermotor (4) in Verbindung steht. Um die Drehmasse insbesondere für Anwendungen im Rennsport gering zu halten, ist erfindungsgemäß vorgesehen, dass zwischen dem Zahnkranz (3) und der Schwungscheibe (1) ein Freilauf (5) angeordnet ist und dass die Lagerung des Zahnkranzes (3) relativ zur Schwungscheibe (1) mit einem Lager (6) erfolgt, dessen Innenring (7) direkt oder indirekt mit der Schwungscheibe (1) verbunden ist und dessen Außenring (8) direkt oder indirekt mit dem Zahnkranz (3) verbunden ist.

## Beschreibung

Die Erfindung betrifft eine Vorrichtung zur kuppelbaren Verbindung der Schwungscheibe eines Antriebsmotors, insbesondere eines Verbrennungsmotors, mit einer Abtriebswelle, insbesondere einer Getriebewelle, mittels einer Kupplungseinrichtung, insbesondere einer Kraftfahrzeugkupplungseinrichtung, wobei die Schwungscheibe zumindest zeitweise mit einem Zahnkranz in Drehverbindung steht und wobei der Zahnkranz mit einem Startermotor in Verbindung steht.

Zum Anlassen eines Verbrennungsmotors ist ein Startermotor erforderlich, der meist über einen Zahnkranz auf die Schwungscheibe des Verbrennungsmotors wirkt. Bei Betätigung des Startermotors wird über die Schwungscheibe die Kurbelwelle des Motors gedreht, bis der Motor läuft.

Aus der DE 30 46 612 A1 ist eine Kupplungsvorrichtung bekannt, bei der die Schwungscheibe und die Kurbelwelle des Verbrennungsmotors mittels eines sperrbaren Freilaufs verbunden sind. Dadurch kann im Schubbetrieb des Fahrzeugs die Drehverbindung zwischen Kurbelwelle und Schwungscheibe unterbrochen werden, während durch die Freilaufsperre im Zugbetrieb die Drehverbindung wieder herstellbar ist.

In manchen Anwendungsfällen ist es erforderlich oder zumindest wünschenswert, dass die Drehmasse des Motors so gering wie möglich gehalten wird. Als Beispiel sei der Rennsport genannt, bei dem regelmäßig eine geringe Drehmasse im Antriebsstrang angestrebt wird, um eine hohe Dynamik des Fahrzeugs zu erreichen. Für diese Anwendungsfälle sind spezielle Kupplungsvorrichtungen bekannt, die sich durch einen relativ kleinen Bauraum auszeichnen.

Probleme ergeben sich, wenn eine solche spezielle (Renn-)Kupplungsvorrichtung an sonst typische Serienbauteile angeschlossen werden soll. Namentlich ist es wünschenswert, dass serienmäßige Startermotoren weiterhin verwendet werden können, die auf einen Zahnkranz mit einem relativ großen Durchmesser wirken. Die Beibehaltung eines großen Zahnkranzes ist auch unter dem Aspekt sinnvoll, dass dann ein relativ schwacher und leichter Startermotor verwendet werden kann, der dennoch ein hinreichendes Antriebsdrehmoment an der Schwungscheibe erzeugen kann.

Dadurch ist jedoch zumeist die Drehmasse des Systems relativ groß, was die Dynamik des Verbrennungsmotors bzw. des ganzen Antriebsstranges negativ beeinflusst.

Der Erfindung liegt daher die **Aufgabe** zugrunde, eine Vorrichtung der eingangs genannten Art so weiterzubilden, dass im Betrieb des Motors eine möglichst geringe Drehmasse vorliegt. Dennoch soll ein Zahnkranz üblichen ― großen ― Durchmessers zur Anwendung kommen können, wie er serienmäßig eingesetzt wird, um einen leichten Startermotor bei hinreichendem Starterdrehmoment verwenden zu können.

Die **Lösung** dieser Aufgabe durch die Erfindung ist dadurch gekennzeichnet, dass zwischen dem Zahnkranz und der Schwungscheibe ein Freilauf angeordnet ist und dass die Lagerung des Zahnkranzes relativ zur Schwungscheibe mit einem Lager erfolgt, dessen Innenring direkt oder indirekt mit der Schwungscheibe verbunden ist und dessen Außenring direkt oder indirekt mit dem Zahnkranz verbunden ist.

Mit dieser Ausgestaltung wird erreicht, dass der Zahnkranz und namentlich dessen radial außerhalb des Freilaufs liegende Drehmasse nach dem Starten des Motors mittels des Startermotors von der Schwungscheibe entkoppelt ist und anhalten kann, so dass durch den Zahnkranz die Drehmasse des Motors nicht erhöht wird. Weiterhin ist es möglich, einen serienmäßigen Zahnkranz auch im Falle der Verwendung einer für den Rennsport ausgebildeten Kupplungsvorrichtung einzusetzen, ohne Nachteile hierdurch hinnehmen zu müssen.

Bevorzugt ist vorgesehen, dass der Freilauf auf einem zylindrischen Sitzabschnitt eines Flansches angeordnet ist, der an dem Gehäuse der Kupplungseinrichtung festgelegt oder mit diesem einstückig ausgeführt ist, wobei das Gehäuse der Kupplungseinrichtung mit der Schwungscheibe drehfest verbunden ist. Entsprechend kann vorgesehen werden, dass auch das Lager auf dem genannten zylindrischen Sitzabschnitt des Flansches angeordnet ist.

Nach einer bevorzugten Ausführungsform der Erfindung sind der Freilauf und das Lager nebeneinander angeordnet, insbesondere auf dem zylindrischen Sitzabschnitt des Flansches. Zwischen Freilauf und Lager kann dabei eine Distanzscheibe angeordnet sein.

Der Freilauf und das Lager können an dem von der Schwungscheibe abgewandten Ende der Kupplungseinrichtung angeordnet sein.

Der Freilauf und/oder das Lager können axial durch mindestens einen Sicherungsring gesichert bzw. fixiert werden.

Das vorgeschlagene Konzept ermöglicht ― wie erläutert ― eine Integration serienmäßiger Teile bei der Verwendung spezieller Komponenten für den Rennsport. Dabei kommt den Größenverhältnissen eine gewisse Bedeutung zu. Bevorzugt ist daher vorgesehen, dass der Freilauf auf einem Durchmesser angeordnet ist, der höchstens 60 %, vorzugsweise höchsten 40 %, des Durchmessers beträgt, auf dem sich der Zahneingriff des Zahnkranzes befindet. Unter Durchmesser des Freilaufs ist der mittlere Durchmesser zu verstehen, auf dem sich die Sperrkörper befinden. Unter Durchmesser des Zahnkranzes ist der Teilkreis der Verzahnung zu verstehen, die am Umfang des Zahnkranzes angeordnet ist, um einem Ritzel des Startermotors den Eingriff zu ermöglichen.

Entsprechend ist bevorzugt das Lager auf einem Durchmesser angeordnet, der höchstens 60 %, vorzugsweise höchstens 40 %, des Durchmessers beträgt, auf dem sich der Zahneingriff des Zahnkranzes befindet. Unter Durchmesser des Lagers ist der Durchmesser der Mitte der Wälzkörper im Falle eines Wälzlagers zu verstehen.

Weiterhin ist eine besonders kompakte Ausgestaltung möglich, wenn vorgesehen wird, dass der Freilauf auf einem Durchmesser angeordnet ist, der höchstens 75 %, vorzugsweise höchstens 60 %, des äußeren Durchmessers des Gehäuses der Kupplungseinrichtung beträgt; dasselbe gilt für die Anordnung des Lagers.

Bevorzugt kommt für die Kupplungsbetätigung ein sog. Zentralausrücker zum Einsatz. Danach kann ein am von der Schwungscheibe abgewandten Ende der Kupplungseinrichtung angeordnetes Ausrückelement (Zentralausrücker) zur Erzeugung eines axialen Verschiebeweges angeordnet sein, wobei der Freilauf dann bevorzugt auf einem Durchmesser angeordnet ist, der größer ist als der äußere Durchmesser des Ausrückelements, insbesondere dessen Kolben. Entsprechendes gilt für das Lager und seinen Durchmesser. Das Ausrückelement kann dabei einen axial verschieblichen Kolben aufweisen, dessen der Schwungscheibe zugewandtes Ende axial etwa in Höhe des Freilaufs und/oder des Lagers angeordnet ist. Durch diese Ausgestaltung kann eine besonders kompakte Bauweise erreicht werden, die platzsparend ist.

Ein kompakter Aufbau der Vorrichtung wird auch dadurch begünstigt, wenn der Zahnkranz samt seinem Trägerelement im Radialschnitt eine U-förmige Gestalt hat. Dann kann ein zur Aufnahme von Freilauf und Lager dienender, sich axial erstreckender Abschnitt in einem axialen Bereich angeordnet sein, der vom axialen Ort des Zahnkranzes beabstandet ist. Bevorzugt kommt das radial äußere Ende des Zahnkranzes axial etwa mittig über der Kupplungsvorrichtung zu liegen.

Das Lager ist vorzugsweise ein Wälzlager, wobei insbesondere an ein Rillenkugellager gedacht ist. Der. Freilauf ist bevorzugt als Klemmkörperfreilauf ausgebildet.

Der Flansch, der den zylindrischen Sitz für den Freilauf und das Lager aufweist, besteht bevorzugt aus Aluminium, Stahl oder einer Titanlegierung. Der Sitzabschnitt des Flansches ist bevorzugt mit einer Hartschicht versehen, die insbesondere aus Aluminiumoxid oder Titannitrid besteht, wobei eine weitere erfindungsgemäße Möglichkeit vorsieht, hier durch Flammschockspritzen eine karbidhaltige Schicht als sehr harte, und anschließend geglättete Oberfläche aufzuspritzen. Alternativ kann hier auch eine Randschichthärtung, insbesondere bei Verwendung von Stahl als Werkstoff für den Flansch, wie zum Beispiel Einsatzhärten, Bohrieren oder Nitrieren vorgesehen sein. Auch ist eine induktive Randschichthärtung vorteilhaft. Eine weitere erfindungsgemäße Ausgestaltung sieht vor, dass die Hartschicht mittels PhysicalVapourDeposition -Verfahren oder ChemicalVapourDeposition-Verfahren aufgebracht wird. Durch diese vorgenannten Beschichtung lassen sich harte und verschleißarme Schichten erzeugen. Auch das den Zahnkranz tragende Trägerelement besteht vorzugsweise aus Aluminium, Stahl oder einer Titanlegierung.

Mit dem vorgeschlagenen Konzept ist es möglich, für den Rennsport optimierte Kupplungskomponenten ― mit relativ kleinen Durchmessern ― einzusetzen, ohne auf den serienmäßigen Zahnkranz und Startermotor verzichten zu müssen. Diese können vielmehr in vorteilhafter Weise weiter verwendet werden, da durch den großen Zahnkranzdurchmesser ein leichter Startermotor verwendet werden kann, mit dem dennoch ein großes Anlassdrehmoment erzeugt werden kann.

Durch das Abkoppeln des Zahnkranzes über den Freilauf bei entsprechender Drehzahl des Motors ist die Drehmasse durch den großen Zahnkranz jedoch nicht erhöht, sondern verringert, was der Dynamik des Motors und des gesamten Antriebsstranges zugute kommt.

Die vorgeschlagene Konzeption kommt darüber hinaus mit relativ geringem axialen Bauraum aus, so dass die Vorrichtung insgesamt klein baut.

Wenngleich für Anwendungen im Rennsport bevorzugt eingesetzt, kann der Erfindungsvorschlag für beliebige Vorrichtungen der gattungsgemäßen Art eingesetzt werden.

In der Zeichnung ist ein Ausführungsbeispiel der Erfindung dargestellt. Es zeigen:

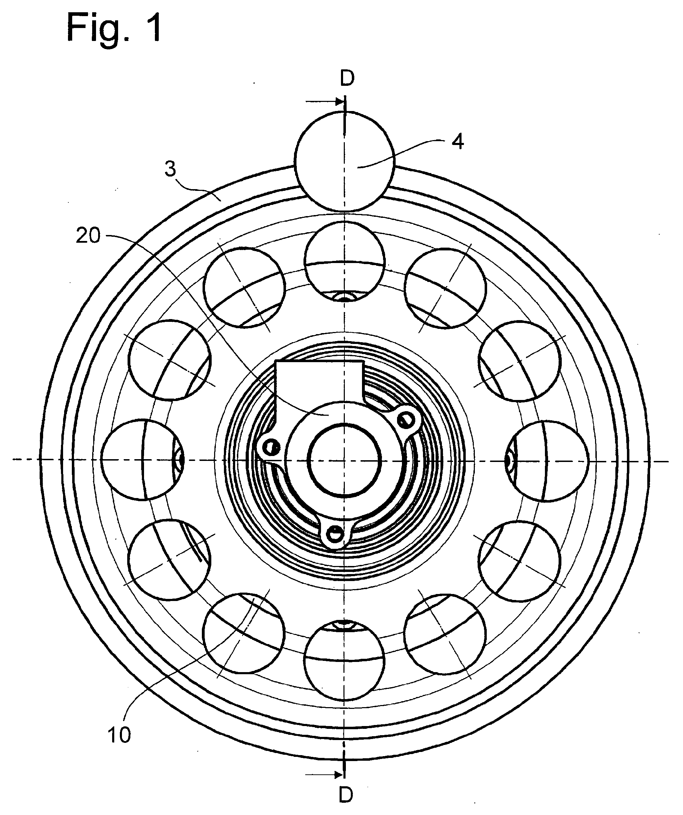

- Fig. 1: die Ansicht einer Vorrichtung zur kuppelbaren Verbindung der Schwungscheibe eines Verbrennungsmotors mit einer Getriebewelle in Achsrichtung betrachtet (Ansicht "A" gemäß Fig. 2) und
- Fig. 2: den Schnitt D-D gemäß Fig. 1.

In den Figuren ist eine Vorrichtung zur kuppelbaren Verbindung der Schwungscheibe 1 eines Verbrennungsmotors mit einer ― nicht dargestellten ― Getriebewelle skizziert, wobei hierfür eine Kupplungseinrichtung zum Einsatz kommt. Die Schwungscheibe 1 steht mit einem Zahnkranz 3 in Drehverbindung; der Zahnkranz 3 wiederum wird von einem Startermotor 4 angetrieben. Von dem Verbrennungsmotor ist neben der Schwungscheibe 1 nur das Motorgehäuse 21 schematisch dargestellt.

Die Kupplungseinrichtung 2 ist als kompakt aufgebaute Vorrichtung konzipiert, wie sie im Rennsport Verwendung findet. Beispielhaft ist hier das RCS-Baukastensystem zu nennen ("Racing Clutch System" aus dem Hause der Anmelderin), das Komponenten mit relativ kleinem Außendurchmesser aufweist und dennoch hohe Leistungen übertragen kann. Der zum Einsatz kommende Zahnkranz entspricht indes üblichen Serienteilen, d. h. er hat einen relativ großen Durchmesser (Teilungsdurchmesser der Verzahnung am Außendurchmesser des Zahnkranzes d₂).

Die Kupplungseinrichtung 2 hat ein Gehäuse 11, das im wesentlichen einen Außendurchmesser d₃ aufweist. Das Gehäuse 11 steht an seinem der Schwungscheibe 1 zugewandten axialen Ende mit dieser drehfest in Verbindung. Auf der der Schwungscheibe 1 abgewandten Endseite des Gehäuses 11 ist ein Flansch 10 angeordnet, d. h. es ist an das Gehäuse 11 angeschraubt und mittels geeigneter Passelemente zu diesem zentriert. Der Flansch 10 hat radial nach innen versetzt einen zylindrischen Sitzabschnitt 9. Dieser dient zur Aufnahme eines Klemmkörperfreilaufs 5 und eines Rillenkugellagers 6, die benachbart ― getrennt durch eine Distanzscheibe 12 ― angeordnet sind. Ein Sicherungsring 13 sorgt für einen axial festen Sitz von Freilauf-Innenring 17 und Lager-Innenring 7 relativ zum Sitzabschnitt 9.

Sowohl der Außenring 18 des Freilaufs 5 als auch der Außenring 8 des Lagers 6 sitzen ― allerdings etwas radial versetzt ― in einem sich axial erstreckenden Aufnahmeabschnitt 19 eines Trägerelements 16, an dessen äußerem Umfang der Zahnkranz 3 angeordnet (angeschraubt) ist.

Sowohl der Freilauf 5 als auch das Lager 6 sind auf einem Durchmesser d₁ angeordnet, der wesentlich kleiner ist als der Durchmesser d₂ des Zahnkranzes 3. Im Ausführungsbeispiel beträgt der Durchmesser d₁ lediglich ca. 35 % des Durchmessers d₂.

Auch im Verhältnis zum Außendurchmesser d₃ des Gehäuses 11 der Kupplungseinrichtung 2 ist der Durchmesser d₁ des Freilaufs 5 bzw. des Lagers 6 relativ gering; er liegt im Ausführungsbeispiel bei ca. 55 % des Außendurchmessers d₃ des Gehäuses 11.

Zur Betätigung der Kupplungseinrichtung 2 dient ein als Einheit ausgebildetes Ausrückelement 14, die einen Ausrücker, einen Nehmerzylinder und eine Führungshülse inkorporiert. _Diese auch als CSC (Concentric Slave Cylinder) bekannte Einheit weist einen axial festen Zylinder 20 auf, in dem ein axial verschieblicher Kolben 15 geführt ist. Der Außendurchmesser d₄ des Ausrückelements 14 und namentlich dessen Kolben 15 ist geringer als der Durchmesser d₁ des Freilaufs 5 bzw. des Lagers 6. Dies hat zur Folge, dass der Kolben 15 axial unter den Freilauf 5 bzw. das Lager 6 tauchen kann, was eine besonders kompakte und axial raumsparende Bauweise erlaubt.

Nach dem Starten des Motors mittels des Startermotors 4 ― insbesondere im Rennsporteinsatz ― wird der Anlasserzahnkranz nicht mehr benötigt. In vorbekannten Konstruktionen wird er jedoch bei jedem Hochdrehen des Verbrennungsmotors mit drehbeschleunigt, da er zumeist drehfest mit der Schwungscheibe bzw. der Kupplungseinrichtung verbunden ist. Dies bedeutet eine unnötig mitbeschleunigte Drehmasse, die der Motordrehbeschleunigung entgegenwirkt.

Durch die Entkopplung des Anlasserzahnkranzes 3 von der Schwungscheibe 1 über den erfindungsgemäß vorgesehenen Freilauf nach dem Startvorgang kann die drehzubeschleunigende Masse reduziert werden, was die Dynamik des Motors verbessert.

Beim Starten des Verbrennungsmotors übt der Startermotor 4 durch Eingriff seines ― nicht dargestellten ― Ritzels in den Zahnkranz 3 eine Drehbewegung aus, die über das Trägerelement 16 und den noch gesperrten Freilauf 5 auf den zylindrischen Sitzabschnitt 9, den Flansch 10, das Gehäuse 11 und schließlich auf die Schwungscheibe 1 übertragen wird. Hierdurch wird der Verbrennungsmotor angelassen.

Ist der Verbrennungsmotor gestartet, koppelt der Freilauf 5 nach Überschreiten der Überholdrehzahl durch die Kurbelwelle den Starterzahnkranz 3 samt Trägerelement 16 von der Kupplungseinrichtung 2 ab. Durch den ständigen Eingriff des Ritzels des Startermotors 4 in den Zahnkranz 3 und durch das dem Startermotor 4 innewohnende Schleppmoment bei dessen Nicht-Antreiben wird der Zahnkranz 3 und damit auch das Trägerelement 16 bei laufendem Verbrennungsmotor im Ruhezustand gehalten, d. h. die genannten Elemente rotieren nicht.

Dies hat auch Vorteile bei einem Schnellstart bzw. nach dem "Abwürgen" des Motors, weil der Anlasserdrehkranz dann nicht erst noch weiterdreht und das eingreifende Ritzel des Startermotors belastet bzw. beschädigt.

Insgesamt wird die drehzubeschleunigende Masse gering gehalten, so dass die Dynamik des Verbrennungsmotors hoch ist.

Der Zahnkranz 3 wird durch das Rillenkugellager 6 sowohl radial als auch axial geführt, sobald der Freilauf 5 die Abhebedrehzahl seiner Klemmkörper erreicht hat, was bei ca. 600 U/min der Fall ist. Der Innenring 7 des Lagers 6 dreht sich danach mit Kurbelwellendrehzahl. Der sich zusammen mit dem Innenring 7 auf dem zylindrischen Sitzabschnitt 9 befindliche Freilauf-Innenring 17 dreht sich gleichermaßen mit Motordrehzahl mit. Oberhalb der Abhebedrehzahl der Klemmkörper besteht also keine Drehverbindung zwischen dem zylindrischen Sitzabschnitt 9 und dem Aufnahmeabschnitt 19.

Durch das schnelle Erreichen der Leerlaufdrehzahl wird der Freilauf 5 nur gering belastet, so dass eine besondere Vorkehrung für dessen Versorgung mit Schmiermittel nicht erforderlich ist. Es ist insbesondere keine gekapselte Schmierung des Freilaufs 5 erforderlich; es genügt eine einmalige Besprühung des Freilaufs bzw. seiner Klemmkörper mit Haftöl. Der Freilauf läuft also trocken oder (einmalig) fettgeschmiert, jedenfalls ist kein Ölbad erforderlich.

Aufgrund der Ausbildung des Freilaufs 5 als Klemmkörperfreilauf (nicht als Rollenfreilauf) ergibt sich eine vollständige Unterbrechung der Drehkopplung ab Überholdrehzahl, so dass der Zahnkranz 3 vollständig zum Stillstand kommen kann. D. h. ab der Abhebedrehzahl der Klemmkörper des Freilaufs 5 gelangen die Klemmkörper außer Eingriff.

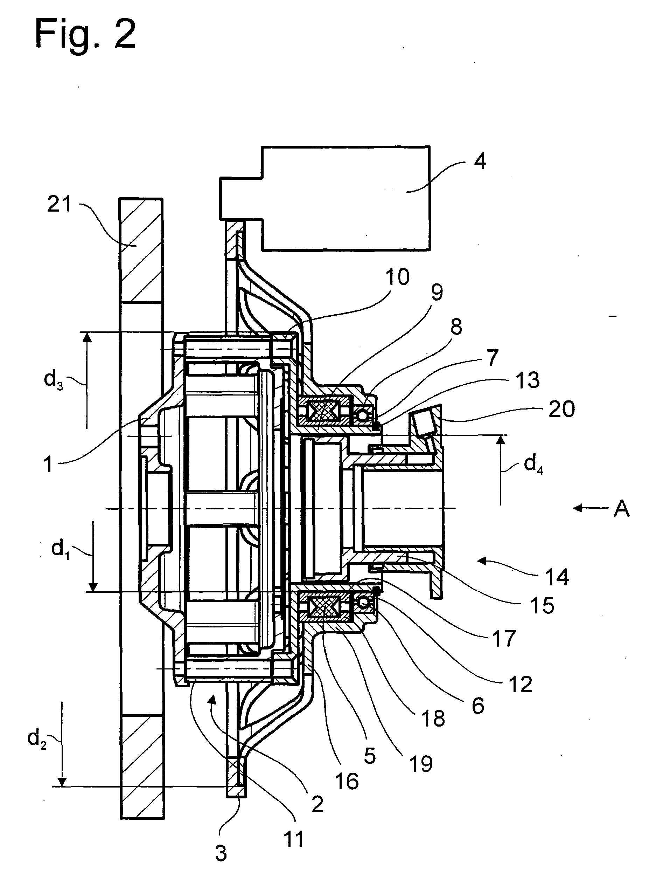

Wie in Fig. 2 zu sehen ist, ist das Ausrücksystem 14 teilweise axial gesehen innerhalb des Freilaufs 5 bzw. des Lagers 6 angeordnet, so dass sich in axiale Richtung eine sehr kompakte Bauform ergibt.

Der große Außendurchmesser des Zahnkranzes 3 ermöglicht die Verwendung eines leichten und kleinen Startermotors 4, da dieser über den großen Durchmesser d₂ ein hinreichendes Drehmoment für das Anlassen des Verbrennungsmotors aufbauen kann.

Im Ausführungsbeispiel sind das Gehäuse 11 der Kupplungseinrichtung 2 und der Flansch 10 zweiteilig ausgebildet. Es kann aber auch vorgesehen sein, dass es sich hier um ein einziges Teil handelt, was die Zentrierung / Anschraubung des Flansches 10 am Gehäuse 11 entbehrlich macht.

### Bezugszeichenliste

- 1: Schwungscheibe
- 2: Kupplungseinrichtung
- 3: Zahnkranz
- 4: Startermotor
- 5: Freilauf
- 6: Lager
- 7: Innenring
- 8: Außenring
- 9: zylindrischer Sitzabschnitt
- 10: Flansch
- 11: Gehäuse
- 12: Distanzscheibe
- 13: Sicherungsring
- 14: Ausrückelement
- 15: axial verschieblicher Kolben
- 16: Trägerelement
- 17: Freilauf-Innenring
- 18: Freilauf-Außenring
- 19: Aufnahmeabschnitt
- 20: Zylinder
- 21: Motorgehäuse

- d₁: Durchmesser
- d₂: Durchmesser
- d₃: Durchmesser
- d₄: Durchmesser

## Patentansprüche

1. Vorrichtung zur kuppelbaren Verbindung der Schwungscheibe (1) eines Antriebsmotors, insbesondere eines Verbrennungsmotors, mit einer Abtriebswelle, insbesondere einer Getriebewelle, mittels einer Kupplungseinrichtung (2), insbesondere einer Kraftfahrzeugkupplungseinrichtung, wobei die Schwungscheibe (1) zumindest zeitweise mit einem Zahnkranz (3) in Drehverbindung steht und wobei der Zahnkranz (3) mit einem Startermotor (4) in Verbindung steht,
**dadurch gekennzeichnet, dass**
zwischen dem Zahnkranz (3) und der Schwungscheibe (1) ein Freilauf (5) angeordnet ist und dass die Lagerung des Zahnkranzes (3) relativ zur Schwungscheibe (1) mit einem Lager (6) erfolgt, dessen einer Ring, insbesondere dessen Innenring (7), direkt oder indirekt mit der Schwungscheibe (1) verbunden ist und dessen anderer Ring, insbesondere dessen Außenring (8), direkt oder indirekt mit dem Zahnkranz (3) verbunden ist.

2. Vorrichtung nach Anspruch 1, **dadurch gekennzeichnet, dass** der Freilauf (5) auf einem zylindrischen Sitzabschnitt (9) eines Flansches (10) angeordnet ist, der an dem Gehäuse (11) der Kupplungseinrichtung (2) festgelegt oder mit diesem einstückig ausgeführt ist, wobei das Gehäuse (11) der Kupplungseinrichtung (2) mit der Schwungscheibe (1) drehfest verbunden ist.

3. Vorrichtung nach Anspruch 1 oder 2, **dadurch gekennzeichnet, dass** das Lager (6) auf einem zylindrischen Sitzabschnitt (9) eines Flansches (10) angeordnet ist, der an dem Gehäuse (11) der Kupplungseinrichtung (2) festgelegt oder mit diesem einstückig ausgeführt ist, wobei das Gehäuse (11) der Kupplungseinrichtung (2) mit der Schwungscheibe (1) drehfest verbunden ist.

4. Vorrichtung nach einem der Ansprüche 1 bis 3, **dadurch gekennzeichnet, dass** der Freilauf (5) und das Lager (6) nebeneinander angeordnet sind, insbesondere auf dem zylindrischen Sitzabschnitt (9) des Flansches (10).

5. Vorrichtung nach Anspruch 4, **dadurch gekennzeichnet, dass** zwischen Freilauf (5) und Lager (6) eine Distanzscheibe (12) angeordnet ist.

6. Vorrichtung nach einem der Ansprüche 1 bis 5, **dadurch gekennzeichnet, dass** der Freilauf (5) und das Lager (6) an dem von der Schwungscheibe (1) abgewandten Ende der Kupplungseinrichtung (2) angeordnet sind.

7. Vorrichtung nach einem der Ansprüche 1 bis 6, **dadurch gekennzeichnet, dass** der Freilauf (5) und/oder das Lager (6) axial durch mindestens einen Sicherungsring (13) gesichert sind.

8. Vorrichtung nach einem der Ansprüche 1 bis 7, **dadurch gekennzeichnet, dass** der Freilauf (5) auf einem Durchmesser (d₁) angeordnet ist, der höchstens 60 %, vorzugsweise höchsten 40 %, des Durchmessers (d₂) beträgt, auf dem sich der Zahneingriff des Zahnkranzes (3) befindet.

9. Vorrichtung nach einem der Ansprüche 1 bis 8, **dadurch gekennzeichnet, dass** das Lager (6) auf einem Durchmesser (d₁) angeordnet ist, der höchstens 60 %, vorzugsweise höchsten 40 %, des Durchmessers (d₂) beträgt, auf dem sich der Zahneingriff des Zahnkranzes (3) befindet.

10. Vorrichtung nach einem der Ansprüche 1 bis 9, **dadurch gekennzeichnet, dass** der Freilauf (5) auf einem Durchmesser (d₁) angeordnet ist, der höchstens 75 %, vorzugsweise höchstens 60 %, des äußeren Durchmessers (d₃) des Gehäuses (11) der Kupplungseinrichtung (2) beträgt.

11. Vorrichtung nach einem der Ansprüche 1 bis 10, **dadurch gekennzeichnet, dass** das Lager (6) auf einem Durchmesser (d₁) angeordnet ist, der höchstens 75 %, vorzugsweise höchstens 60 %, des äußeren Durchmessers (d₃) des Gehäuses (11) der Kupplungseinrichtung (2) beträgt.

12. Vorrichtung nach einem der Ansprüche 1 bis 11, **gekennzeichnet durch** ein am von der Schwungscheibe (1) abgewandten Ende der Kupplungseinrichtung (2) angeordnetes Ausrückelement (14) zur Erzeugung eines axialen Verschiebeweges, wobei der Freilauf (5) auf einem Durchmesser (d₁) angeordnet ist, der größer ist als der äußere Durchmesser (d₄) des Ausrückelements (14), insbesondere dessen Kolben (15).

13. Vorrichtung nach Anspruch 12, **dadurch gekennzeichnet, dass** das Lager (6) auf einem Durchmesser (d₁) angeordnet ist, der größer ist als der äußere Durchmesser (d₄) des Ausrückelements (14), insbesondere dessen Kolben (15).

14. Vorrichtung nach Anspruch 12 oder 13, **dadurch gekennzeichnet, dass** das Ausrückelement (14) einen axial verschieblichen Kolben (15) aufweist, dessen der Schwungscheibe (1) zugewandtes Ende axial etwa in Höhe des Freilaufs (5) und/oder des Lagers (6) angeordnet ist.

15. Vorrichtung nach einem der Ansprüche 1 bis 14, **dadurch gekennzeichnet, dass** der Zahnkranz (3) samt einem diesen tragenden Trägerelement (16) im Radialschnitt eine U-förmige Gestalt hat.

16. Vorrichtung nach einem der Ansprüche 1 bis 15, **dadurch gekennzeichnet, dass** das Lager (6) ein Wälzlager ist.

17. Vorrichtung nach Anspruch 16, **dadurch gekennzeichnet, dass** das Lager (6) ein Rillenkugellager ist.

18. Vorrichtung nach einem der Ansprüche 1 bis 17, **dadurch gekennzeichnet, dass** der Freilauf (5) ein Klemmkörperfreilauf ist.

19. Vorrichtung nach einem der Ansprüche 2 bis 18, **dadurch gekennzeichnet, dass** der Flansch (10) aus Aluminium oder Stahl besteht.

20. Vorrichtung nach einem der Ansprüche 2 bis 19, **dadurch gekennzeichnet, dass** der Sitzabschnitt (9) des Flansches (10) mit einer Hartschicht versehen ist, insbesondere aus Aluminiumoxid , Titannitrid oder Stahl.

21. Vorrichtung nach einem der Ansprüche 15 bis 20, **dadurch gekennzeichnet, dass** das den Zahnkranz (3) tragende Trägerelement (16) aus Aluminium, Stahl oder einer Titanlegierung besteht.
